# EUROPEAN PATENT SPECIFICATION

(11) **EP 4 280 887 B1**
(45) Date of publication and mention of the grant of the patent: **25.06.2025**
(21) Application number: 22724385.4
(22) Date of filing: 03.05.2022
(51) Int. Cl.: A23G 1/32, A21D 2/26, A23G 1/44, A23G 1/48, A23L 25/00, A21D 13/00

(54) **COCOA COMPOSITION**
KAKAOZUSAMMENSETZUNG
COMPOSITION DE CACAO

(30) Priority: 04.05.2021 EP 21171999
(43) Date of publication of application: 29.11.2023
(60) Divisional application: 25169869.2
(73) Proprietor: Cargill, Incorporated, Wayzata, Minnesota 55391 (US)
(72) Inventor: BAREY, Vanessa, 59700 Marcq-en-Baroeul (FR)
(74) Representative: Jantschy, Jasmin
(86) International application number: PCT/US2022/072070
(87) International publication number: WO 2022/236259

(56) References cited:
- WO-A1-2014/035470
- RO-A2- 134 168
- RU-C1- 2 334 400
- RU-C1- 2 618 326
- US-A- 4 235 939
- US-A1- 2014 087 026
- DATABASE BIOSIS [online] BIOSCIENCES INFORMATION SERVICE, PHILADELPHIA, PA, US; 2021, BOBOZHONOVA G A ET AL: "Influence of high-protein flour from sunflower shrot on the change in the properties of chocolate masses", Database accession no. PREV202200004831
- INTERNATIONAL CONFERENCE ON PRODUCTION AND PROCESSING OF AGRICULTURAL RAW MATERIALS IOP PUBLISHING LTD, DIRAC HOUSE, TEMPLE BACK, BRISTOL BS1 6BE, UK SERIES : IOP CONFERENCE SERIES-EARTH AND ENVIRONMENTAL SCIENCE (1755-1307(PRINT)), 2021, INTERNATIONAL CONFERENCE ON FOOD PRODUCTION AND PROCESSING OF AGRICULTURAL RAW MATERIALS (P2ARM); VORONEZH, RUSSIA; FEBRUARY 26 -29, 2020, pages Article No.: 022023, DOI: 10.1088/1755-1315/640/2/022023

## Description

### FIELD OF THE INVENTION

The invention relates to a cocoa composition comprising a sunflower seed powder, wherein the cocoa composition is a chocolate composition.

### BACKGROUND OF THE INVENTION

BIOSCIENCES INFORMATION SERVICE, PHILADELPHIA, PA, US; 2021, BOBOZHONOVA G A ET AL: "Influence of high-protein flour from sunflower shrot on the change in the properties of chocolate masses",Database accession no. PREV202200004831 ; & INTERNATIONAL CONFERENCE ON PRODUCTION AND PROCESSING OF AGRICULTURAL RAW MATERIALS IOP PUBLISHING LTD, DIRAC HOUSE, TEMPLE BACK, BRISTOL BS1 6BE, UK SERIES : IOP CONFERENCE SERIES-EARTH AND ENVIRONMENTAL SCIENCE (1755-1307(PRINT)),2021, page Article No.: 022023,INTERNATIONAL CONFERENCE ON FOOD PRODUCTION AND PROCESSING OF AGRICULTURAL RAW MATERIALS (P2ARM); VORONEZH, RUSSIA; FEBRUARY 26 -29, 2020 discloses different compositions of chocolate comprising 25%, 20 %, 15%, 10% or 5% cocoa solids and 5%, 10% , 15%, 20% and 25% sunflower flour. Chocolate flavour is one of the most popular flavours in the world, with many foodstuffs incorporating chocolate or cocoa-derived ingredients in some fashion. Chocolate confectionary covers a wide range of sweet food products based on cocoa-derived ingredients, such as chocolate, cocoa-based coatings or couvertures, and cocoa-based fillings. Chocolate is especially popular for its typical fast melting in the mouth resulting in an explosion of bittersweet cocoa taste.

Most chocolate compositions traditionally contain sugar (typically sucrose). Sugar serves several vital functions in chocolate. Most importantly, it provides sweetness. It also provides bulk and plays a significant role in the structure, volume, and mouthfeel of the finished product. However, there is growing pressure on the food industry to use less sugar in order to reduce sugar consumption and associated health issues in the global population. Several countries have enacted laws requiring the sugar content of commercial foods to be below a certain threshold. Formulating foods without sugar or with reduced sugar content is challenging because a sugar replacement will ideally not only replace the sweetness of sugar, but also fulfil all its other various functions.

Many chocolate compositions also contain milk solids to give an extra dimension of creaminess and milky taste. However, despite its appeal, milk-based chocolate products contain significant amounts of butter fat, milk protein and lactose. As a result, milk-based chocolate confectionary cannot be consumed by those suffering from lactose intolerance or milk allergies. It will also be undesirable for those following a vegan diet or avoiding dairy for religious or lifestyle reasons.

Past attempts to replace sugar and/or milk solids in chocolate products have resulted in products with poor organoleptic and rheological properties. For example, sugarreduced chocolates in which all or part of the sugar has been replaced with bulking agents and high-intensity sweeteners tend to be perceived as less desirable by consumers, while typical dairy-free chocolates lack the creamy mouthfeel and flavour of more traditional milk-based chocolate products.

Thus, there remains a need for chocolate confectionary products reduced in or free of milk solids with an improved quality and eating sensation.

### SUMMARY OF THE INVENTION

In one aspect of the present invention, there is provided a cocoa composition comprising a sunflower seed powder, in an amount of 5 to 30 % by weight based on total weight of the cocoa composition, wherein the cocoa composition is a chocolate composition comprising at least 30 % by weight sucrose, at least 30% by weight cocoa solids, and less than 5 % by weight of milk solids.

### DETAILED DESCRIPTION

Unless otherwise specified herein or evident from context, all weights are expressed as a percentage by weight relative to the total weight of the cocoa composition.

The present invention relates to a cocoa composition comprising a seed material.

### Cocoa Composition

The term "cocoa composition" will be used to refer to a substantially homogeneous and fat-continuous composition, typically comprising a mixture of cocoa liquor and/or cocoa powder, cocoa butter and/or cocoa butter replacers, equivalents, improvers, and/or substitutes (together referred to as "cocoa butter alternatives", sugar and/or sugar replacers plus one or more optional ingredients such as emulsifiers and/or flavoring agents.

The cocoa composition according to the present invention preferably comprises cocoa solids in an amount of at least 2 % by weight, more preferably at least 3 % by weight, more preferably at least at least 30% by weight. For instance, the composition may comprise cocoa solids in an amount of 30-50% by weight, preferably in an amount of 30-45% by weight, more preferably in an amount of 30-40% by weight, more preferably in an amount of 30-35% by weight.

The term "cocoa solids" as used herein may refer to any component derived from cocoa beans such as, but not limited to, cocoa liquor, cocoa powder and/or cocoa butter. When expressing the amount of cocoa solids in a composition, it represents the total amount of all such components present in the composition.

Cocoa liquor, also called "cocoa mass", is produced from ground cocoa beans. Prior to or after grinding, the beans may be fermented, dried, roasted, alkalized and/or treated using any other technique known in the art. In one aspect, the cocoa composition of the present invention will comprise 5-30 % by weight, preferably 10-25 % by weight, more preferably 10-20 % by weight, more preferably 10-15 % by weight cocoa liquor.

Cocoa butter is the fat extracted from cocoa beans, typically by pressing the cocoa liquor. Cocoa butter may be deodorized to remove strong or undesirable tastes. Cocoa butter may be replaced, in whole or in part, by cocoa butter alternatives. Cocoa butter alternatives are well known in the art and include cocoa butter replacers, cocoa butter equivalents, cocoa butter improvers, and cocoa butter substitutes. They are typically vegetable fats and/or vegetable fat fractions with similar physical or chemical properties to cocoa butter. Advantageously, the cocoa composition of the invention will include not less than 18 % by weight, preferably not less than 20 % by weight, more preferably not less than 25 % by weight cocoa butter. For example, it may comprise between 20 and 40%, or between 25 and 35% cocoa butter by weight.

Cocoa powder is produced by further grinding or milling the "dry" residue obtained from cocoa liquor after pressing. It may be natural cocoa powder, with a pH of around 5.5, or it may be processed (e.g., treated with alkali or acid). It may have a relatively high fat content, e.g., above 15 % by weight residual cocoa butter, a standard fat content (e.g., 10-15 % by weight cocoa butter), or a low-fat content (less than 10 % by weight cocoa butter). Fat-free cocoa powders may also be used (e.g., with a fat content of less than 2 % by weight).

The cocoa composition is a chocolate composition. The terms "chocolate composition" and "chocolate" will be used interchangeably. Although, they should not be interpreted as being limited to any particular legal definitions of chocolate, in one aspect of the invention, the chocolate composition will be a chocolate product as defined in Directive 2000/36/EC of the European Parliament and of the Council of 23 June 2000. If the cocoa composition is a chocolate composition, it will preferably comprise cocoa solids in an amount of at least 30 % by weight, preferably at least 33 % by weight, more preferably at least 35 % by weight. Alternatively, it may comprise cocoa solids in an amount of at least 40% by weight, preferably at least 43 % by weight, more preferably at least 45% by weight. Advantageously, a chocolate composition according to the present invention will comprise at least 26 % cocoa butter by weight, more preferably at least 28% cocoa butter by weight, more preferably at least 30% cocoa butter by weight.

Although they may be used to produce foodstuffs comprising coatings, fillings or inclusions, the cocoa compositions of the invention will not themselves include such components. Indeed, the compositions of the invention will preferably be homogenous (or "continuous") cocoa compositions. A homogeneous composition is one with a consistent texture and structure throughout. Preferably, the cocoa compositions of the present invention will be characterized by a continuous fat phase. They will preferably not include distinct inclusions.

The cocoa compositions will preferably be moldable compositions. As used herein, the term "moldable" refers to a composition that is capable of being formed into a shape in a mold, setting (preferably at room temperature), and then retaining the molded shape after removal of the mold. Thus, the compositions of the invention will preferably not be in the form of a powder or of a particulate material. Furthermore, the compositions of the present invention will preferably have a water content of less 10% by weight based on the total weight of the composition. More preferably, they will have a water content of less 5%, more preferably less than 3%, more preferably less than 2%, and more preferably less than 1% by weight.

### Seed Material

The cocoa composition according to the invention comprises sunflower seed material, in an amount of 5-30 % by weight, more preferably 10-20 % by weight, more preferably 12-17 % by weight relative to the total weight of the cocoa composition.

The term "seed material" as used herein refers to materials (or matter) originating or derived from one or more plant seed(s) other than the cocoa bean (cocoa solids inherently being present in the cocoa composition as described above).

The seed material may be a defatted seed material. The term "defatted" as used herein will refer to seed materials whose fat content has been reduced and therefore includes both fully and partially defatted seed materials. Defatted seed materials may be obtained e.g., by grinding and pressing the seeds, or by any other method known to the skilled person for removing or extracting oils from seeds. Preferably, the fat content of the seed material will have been reduced by at least 20%, more preferably at least 30%, more preferably at least 40%, more preferably at least 50%, more preferably at least 60%, more preferably at least 70%, more preferably at least 80%, more preferably at least 90%, more preferably at least 95% by weight, relative to the original fat content of the seed material. The defatted seed material will therefore preferably comprise less than 50% fat by weight, relative to total seed material weight. More preferably it will comprise less than 40%, more preferably less than 30%, more preferably less than 20% fat by weight. For example, it may comprise between 0 and 20%, preferably between 2 and 20%, more preferably between 5 and 20% fat by weight. In one aspect of the invention, the seed material will comprise between 5 and 18%, preferably between 8 and 15%, more preferably between 10 and 12% fat by weight.

The seed material will preferably have a high protein content. Advantageously, it will comprise at least 20% protein by weight, relative to total seed material weight. More advantageously, it will comprise at least 30%, more advantageously at least 40% protein by weight. For instance, it may comprise 40-80% protein by weight. Preferably, it will comprise 40-70%, more preferably 40-60%, more preferably 40-50%, more preferably 40-45% protein by weight. High protein seed materials may be obtained through the selection of high protein content seeds.

Preferably, the seed material will be in the form of a powder. Thus, by way of example only, the seed material may be obtained by grinding or milling whole seeds, seed fractions, seed meal, or defatted seed meal. The term "powder" as used herein refers to a substantially dry, bulk solid composed of particles that may flow freely when shaken or tilted. The seed powder will preferably have a moisture content of less than 20%, more preferably less than 15%, more preferably less than 10% by weight.

The seed material used according to the present invention will preferably be in the form of a powder with an average particle size of less than 1mm, more preferably of less than 800 µm (micrometres), more preferably of less than 500 µm, more preferably of less than 300 µm. In the final cocoa composition, however, its particle size will preferably have been reduced, through processing, to no more than 50 µm, more preferably no more than 40 µm, more preferably no more than 30 µm, more preferably no more than 20 µm. For example, the average particle size of the seed material in the finished cocoa composition will preferably be between 10 and 30 µm. As used herein, "average particle size" refers to the D50 particle size value.

The seed material may be obtained from whole seeds but will preferably be from dehulled seeds or seed kernels. Advantageously, therefore, the seed material will be a kernel powder, more advantageously a defatted kernel powder.

The seed material is a sunflower seed powder, more preferably a sunflower kernel powder, more preferably a defatted sunflower kernel powder.

Advantageously, the seed material will be a defatted sunflower kernel powder with a fat content of less than 20% by weight, preferably between 5 and 15% by weight, and a protein content of at least 30% by weight, preferably between 40 and 60% by weight.

A typical defatted sunflower kernel powder suitable for use according to the present invention will have a fat content of less than 20%, preferably of 10-15%; a protein content of at least 30%, preferably of 40-50% by weight; a fibre content of at least 10%, preferably of 15-25% by weight; and a carbohydrate content of 5-20%, preferably 10-15% by weight.

The seed material may be processed according to any methods known in the art. For example, it may be roasted, and/or pasteurised. Preferably, the seed material will be pasteurised. Pasteurisation is a heat treatment used to eliminate pathogens and extend shelf life in food products, typically performed with mild heat, usually less than 100 °C. Pasteurisation may be performed using any method known in the art. It may be performed on whole seeds or on seed powders (i.e., before or after grinding). If the seed material is defatted, pasteurisation may be performed before or after defatting. Preferably, the seed material will be a pasteurised, defatted, sunflower kernel powder.

Preferably, the seed material will consist of sunflower seed material, more preferably of sunflower seed powder, more preferably of sunflower kernel powder, more preferably of defatted sunflower kernel powder, more preferably of pasteurised, defatted, sunflower kernel powder, all as described above. Thus, the cocoa compositions of the present invention will advantageously not comprise any seed powders, seed meal or seed flours other than the sunflower seed material described above (together with the cocoa solids).

### Dairy Ingredients

Advantageously, it has been found that seed materials as described herein may be used to fully or partially replace milk solids. The present invention therefore provides the use of these seed materials as bulking agents and/or texturizing ingredients for the full or partial replacement of milk solids in cocoa compositions.

Accordingly, the cocoa compositions of the present invention have a reduced dairy content. They comprise milk solids in an amount of less than 5 % by weight, preferably in an amount of less than 4 % by weight, more preferably less than 3 % by weight, more preferably less than 2 % by weight, more preferably less than 1 % by weight. In one aspect, the cocoa composition of the invention will be substantially free of milk solids.

"Milk solids" as used herein refers to ingredient obtained by partly or wholly dehydrating whole milk, semi- or fully-skimmed milk, cream, or from partly or wholly dehydrated cream, butter or milk fat, and any derivatives thereof including, but not limited to, milk fat fractions, lactose, whey, whey powder, caseinate, and/or milk hydrolysates. As used herein, "milk" refers to milks of animal and particularly mammalian origin (e.g., cow, buffalo, sheep, and/or goat milk).

### Sweeteners

It has been found that seed materials as described herein may be used to fully or partially replace sugar. The present invention therefore provides the use of these seed materials as bulking agents and/or texturizing ingredients for the full or partial replacement of sugar in cocoa compositions.

Accordingly, the cocoa compositions of the present invention may have a lower content of total sugars than equivalent, traditionally manufactured compositions. The terms "total sugars" and "total sugar content" as used herein refer to the sum of all the sugars in the composition. This may include sugars that are intentionally added to the chocolate as well as sugars that are intrinsic to other ingredients in the chocolate. Total sugars do not include polyols or high intensity sweeteners which may sometimes be used in reduced sugar chocolate recipes.

Non-limiting examples of sugars that may be used in accordance with the present invention, and which may make up the total sugar content of the cocoa composition, include: monosaccharides, such as glucose, dextrose, fructose, allulose or galactose; disaccharides such as sucrose, lactose or maltose; as well as honey, agave syrup, maple syrup, and combinations of two or more thereof.

The term "sucrose" as used herein includes sucrose in various forms including but not limited to standard (e.g., granulated or crystalline) table sugar, powdered sugar, caster sugar, icing sugar, sugar syrup, silk sugar, unrefined sugar, raw sugar cane, and molasses.

To comply with legal standards for reduced-sugar chocolates, the content of total sugars in the cocoa composition of the invention is at least 30% less than that of equivalent commercial chocolates.

The cocoa composition of the invention is a non-sugar reduced composition. The cocoa composition has a total sugar content, at least 30%, more preferably at least 35%, more preferably at least 40% by weight. For example, the total sugar or sucrose content may be between 30 and 55%, preferably between 35 and 50%, more preferably between 40 and 45% by weight.

Preferably, the cocoa composition will not include maltitol, lactitol, and/or erythritol in an amount of more than 30 % by weight, more preferably not in an amount of more than 20 % by weight, more preferably not in an amount of more than 10 % by weight, more preferably not in an amount of more than 5 % by weight. Advantageously, it will contain substantially no maltitol, lactitol, and/or erythritol. In one aspect, it will not include any sugar alcohols. In another aspect, the composition will not include any high intensity sweeteners. In another aspect, it will not include any non- or low-caloric sweeteners.

The cocoa composition is a chocolate composition, comprising at least 30 % by weight sucrose, at least 30 % by weight of cocoa solids and less than 5 % by weight of milk solids, characterized in that it comprises 5-30 % by weight seed material.

In a more preferred aspect of the invention, the cocoa composition is a chocolate composition, comprising at least 40 % by weight sucrose, at least 30 % by weight of cocoa solids and less than 2 % by weight of milk solids, characterized in that it comprises 5-30 % by weight sunflower seed material.

According to the invention, the cocoa composition is a chocolate composition, comprising at least 30 % by weight sucrose, at least 30 % by weight of cocoa solids and less than 5 % by weight of milk solids, characterized in that it comprises 5-30 % by by weight sunflower seed powder, more preferably 5-30 % by weight sunflower kernel powder, more preferably 5-30 % by weight defatted sunflower kernel powder.

In a more preferred aspect of the invention, the cocoa composition is a chocolate composition, comprising at least 40 % by weight sucrose, at least 40 % by weight of cocoa solids, characterized in that it is substantially free of milk solids and comprises 5-30 % by weight sunflower seed material, preferably 5-30 % by weight sunflower seed powder, more preferably 5-30 % by weight sunflower kernel powder, more preferably 5-30 % by weight defatted sunflower kernel powder.

### Other Ingredients

The cocoa compositions of the present invention may comprise other ingredients such as one or more additional bulking agents, plasticizing ingredients, emulsifiers and/or flavourings.

Suitable bulking agents may be selected from the group consisting of oligosaccharides (such as fructo-oligosaccharides and/or galacto-oligosaccharides), polysaccharides (such as starch and starch-derivatives including maltodextrin, dextrin and glucose syrup; fructan; inulin; polydextrose; pectin and the like), insoluble fires (such as resistant starches, cereal fibres, grain fibres, fruit fibres, and legume fibres) and mixtures of two or more thereof.

Preferably, if used, the bulking ingredient will be selected from the group consisting of vegetable fibres, dextrin, maltodextrin, polydextrose, inulin, dehydrated grain syrups (such as dried rice syrup), pectin, and mixtures of two or more thereof.

Bulking agents may be added to the cocoa composition of the present invention in an amount up to 20% by weight. Preferably, they will be added in an amount up to 15% by weight, more preferably in an amount up to 10% by weight. For example, they may be added in an amount of 0.5 to 20 % by weight, preferably in an amount of 1 to 15 % by weight, more preferably in an amount of 2 to 12 % by weight, more preferably in an amount of 3 to 10 % by weight.

Plasticizing ingredients may be added to the cocoa composition of the present invention to reduce its brittleness of and/or to give it a creamier mouthfeel.

Suitable plasticizing ingredients may be selected from the group consisting of vegetable fats and oils, in particular those with a melting point below that of cocoa butter (such as palm oil, palm kernel oil, shea butter, and nut oils such as almond or hazelnut oil), randomized vegetable fats (such as fully or partially chemically and/or enzymatically interesterified fats), vegetable fat fractions (especially low melting point fractions), so-called "soft" cocoa butters (such as those obtained from Brazilian cocoa bean varieties), and combinations of two or more thereof. Suitable plasticizing ingredients will preferably not include hydrogenated fats.

Advantageously, if used, the plasticizing ingredient will select from the group consisting of randomized cocoa butter, cocoa butter fractions, soft cocoa butters, and mixtures of two or more thereof.

Plasticizing ingredients may be added to the cocoa composition of the present invention in an amount up to 10% by weight, excluding any emulsifiers. Preferably, they will be added in an amount of 0.5 to 10 % by weight, more preferably in an amount of 1 to 9 weight%, more preferably in an amount of 1.5 to 8 % by weight, more preferably in an amount of 2 to 7 % by weight, more preferably in an amount of 3 to 6 % by weight, more preferably in an amount from 4 to 5% by weight. These amounts exclude any emulsifiers which will be considered a separate ingredient from the plasticizer ingredient.

Emulsifiers suitable for use in the present invention will be well known to a person skilled in the art and may include, by way of example only, lecithin, PGPR and/or variants thereof such as hydrolysed or PC-enriched (or phosphatidylcholine-enriched) lecithin. If used, emulsifiers will typically be used in an amount of less than 1%, preferably in an amount of less than 0.7%, more preferably in an amount of less than 0.5% by weight.

Suitable flavourings may include, but are not limited to, vanilla flavour, vanillin, caramel flavour and the like.

Advantageously, the cocoa composition according to the present invention shows very similar properties to milk-containing cocoa compositions such as milk chocolate. Along with the cocoa-derived ingredients, milk solids are responsible for some of the most important properties of traditional chocolate compositions. These properties include their sensory qualities, creamy mouthfeel and snap, for instance, and their melting behavior. It was found that the present cocoa compositions maintain a desirable snappy effect when broken or bitten into, without being brittle. They were also found to have a creamy mouthfeel that was comparable to that of milk-based cocoa compositions, and in particular to milk chocolate.

They can be produced by any conventional method for making chocolate or cocoa-based confectionary compositions known to the skilled person. The cocoa solids and other ingredients of the cocoa composition according to the invention are mixed, refined and conched substantially in the same manner one would produce chocolate or cocoa-based confectionary compositions, using any methods known to those of skill in the art. Thus, the present invention includes a process of producing a cocoa composition comprising the steps of (a) mixing the ingredients as described herein, (b) refining the mixture of step a, (c) conching the refined mixture of step b, (d) optionally tempering the conched mixture of step c, and (e) recovering the finished cocoa composition. Once the cocoa composition is processed, it can be placed in molds, or otherwise formed or applied in and/or onto food products as is known in the art.

### Food Products (not part of claimed invention)

Food products comprising cocoa compositions as described herein. These food products will preferably be bakery products and/or confectionary products but could also include other dairy-free or dairy-reduced food products (termed "dairy alternative" products).

A "bakery product" can be defined as any food product wherein flour is used to produce a dough or a batter. Examples of bakery products are, without limitation, breads such as bagels, buns, rolls, biscuits and loaf breads; cookies; brownies; muffins; desserts such as cakes, cheesecakes and pies; snack cakes; sweet goods such as doughnuts, Danish, sweet rolls, cinnamon rolls and coffee cake.

A "confectionary product" is a food item that is rich in sugar. Confectionary products may be amongst others candies, candied nuts, candy bars, caramels, chocolates, chocolate bars, chocolate drops, chocolate in the form of hollow figures or any desired shape, filled chocolate bars, pralines, truffles, cereal bars, chewing gum, pastillage, and other confections that are made primarily of sugar.

A "dairy-alternative" product is an alternative for products traditionally based on milk such as but not limited non-dairy beverages; frozen desserts like ice cream; and other chilled desserts; non-dairy alternatives for cultured dairy such as yoghurt, cream and fresh or cream cheeses; and dairy alternatives for custard-based desserts.

Cocoa compositions of the invention may be used in food products in any form such as melted and mixed into the recipe of the end product, in the form of fillings, inclusions, toppings or coatings, molded around other discrete ingredients such as nuts, fruit, dried fruit, biscuits or biscuit pieces, candy pieces or shapes, and the like, or any combination of two or more thereof.

Thus, bakery products, confectionery products, and frozen or chilled desserts may comprise the chocolate compositions of the present invention as a filling, inclusion, topping and/or coating, and confectionery products may comprise the chocolate compositions of the present invention together with one or more discrete ingredients.

### EXAMPLES

Two samples of cocoa compositions according to the invention, together with a reference milk chocolate composition, were prepared using the recipes shown in Table 1, below.

The ingredients were mixed together for 10 minutes in a Hobart mixer at a temperature of 45 to 50°C. The resulting chocolate paste was then refined in a Bühler three roll refiner, in order to produce refiner flakes having a reduced particle size of between 18 and 24µm.

The refiner flakes were dry-conched for 6 hours at a temperature of 65°C in a 5kg batch Bühler Elkolino monoshaft conche running clockwise at a rotor speed of 1000 rpm. The mixture was then wet-conched for 30 min at 1500rpm counter-clockwise at a temperature of 45°C.

The resulting chocolate mass was then unloaded from the conch and underwent a hand tempering process before being molded into bars.

Several of the obtained chocolates were then analysed to determine viscosity, yield value, fineness, and colour using the methods described below. The results are shown in Table 1.

### Analytical Methods

### Particle Size

A small amount of finished chocolate is placed on the measuring surface of a Mitutoyo micrometer (0-25mm). By pressing, an indication of the size of the largest noncompressible particles can be measured.

### Colour

Color values are expressed as Hunter L, -a and -b values, where the L value represents the "brightness" of the product (black/white scale), the "a" value represents the amount of green/red and the "b" value represents the amount of yellow/blue. The quotient of "a" over "b" represents the redness of the product. The following procedure is used to determine the color value of chocolate.

A small amount of chocolate at 50°C is poured into an optically neutral petri dish (diameter 55mm) right to the top. The petri dish is then placed on a calibrated spectrocolorimeter Minolta CM2500D (Illuminant D65, 10° observer, read values in Hunter L -a and b values, software Minolta SPECTRA MAGIC version 1.00). The L, a and b-values of the chocolate sample are then measured and recorded following the manufacturer's instructions.

### Yield and Viscosity

The flow behaviour of the chocolate is measured by the ICA-Method 46 - 2000 - Viscosity of Cocoa and Chocolate Products using a rheometer RM200 (Lamy Rheology Instruments, Champagne au Mont d'Or, France). This is a shear-rate imposed rheometer with a speed range from 0.3 to 1500rpm and a torque from 0.05 to 30 mNm. The temperature of the measuring cell is kept at 40°C. A small amount of chocolate is brought into the tube. After preshearing the chocolate for 10 min at 5s-1, a stepped flow procedure is applied by increasing and decreasing the shear rate while measuring the shear stress. The Casson model is used to define Casson Yield stress and Casson Viscosity for recipes with a fat content below 38%. For recipes with a fat content higher than 38% a polynomial model is used.

**Table 1.**

| Ingredients (in % by weight) | | Sample 1 | Sample 2 |
|---|---|---|---|
| Standard crystalline table sugar | | 42.2 | 42.2 |
| Cocoa Liquor (Ivory Coast IVC01 cocoa liquor from Cargill) | | 13.74 | 13.74 |
| Cocoa Butter (Pure Prime Pressed from Cargill) | | 29 | 29 |
| Partially defatted sunflower kernel powder (SUNTEIN, sunflower protein flour, Europack, Bulgaria) | | | 14.68 |
| Partially defatted sunflower kernel powder (Sunflower flour, 45% protein, Ceresal, Germany) | | 14.68 | |
| GMO-free soya lecithin (Leciprime 1400 from Cargill) | | 0.37 | 0.37 |
| Standard natural vanilla flavour | | 0.01 | 0.01 |
| TOTAL | | 100 | 100 |
| Total Fat | | 38.41 | 38.41 |
| Total Sugar | | 43.12 | 43.12 |
| Viscosity (Pa.s) | | 0.98 | 1.06 |
| Yield Value (Pa) | | 15.2 | 11.7 |
| Particle Size (µm) | | 21 | 19 |
| Color values | L | 46.17 | 45.84 |
| | a | 8.74 | 8.88 |
| | b | 13.8 | 14.02 |

### Results

The compositions prepared according to the present invention had similar properties to conventional milk chocolate products, with a desirable taste, good snap and creamy mouthfeel.

## Claims

1. A cocoa composition, **characterized in that** it comprises a sunflower seed powder in an amount of 5 to 30 % by weight based on total weight of the cocoa composition, wherein the cocoa composition is a chocolate composition comprising at least 30% by weight sucrose, at least 30% by weight cocoa solids, and less than 5% by weight of milk solids.

2. A cocoa composition according to claim 1, **characterized in that** it comprises 10 to 20 % by weight of a sunflower seed powder.

3. The cocoa composition according to any one of the preceding claims, **characterized in that** the sunflower seed powder is a defatted sunflower seed powder, preferably with a fat content of less than 30% by weight relative to the total weight of the sunflower seed powder.

4. The cocoa composition according to any one of the preceding claims, **characterized in that** the sunflower seed powder is a high protein sunflower seed powder, preferably with a protein content of at least 20% by weight relative to the total weight of the sunflower seed powder.

5. The cocoa composition according to any one of the preceding claims, **characterized in that** the sunflower seed powder is a sunflower kernel powder, preferably a defatted sunflower kernel powder.

6. The cocoa composition according to any one of the preceding claims, **characterised in that** it comprises cocoa butter or a cocoa butter alternative in an amount of at least 18% by weight based on total weight of the cocoa composition.

7. A cocoa composition according to any one of the preceding claims, **characterized in that** it comprises less than 2% milk solids by weight and at least 40% by weight sucrose.

8. A cocoa composition according to any one of the preceding claims, **characterized in that** it is substantially free from milk solids.

9. The cocoa composition according to any one of the preceding claims, **characterized in that** it comprises 45 % or less, preferably 40% or less, more preferably 35% or less total sugars by weight.

10. The cocoa composition according to any one of the preceding claims, **characterized in that** it further comprises one or more ingredients selected from the group consisting of bulking agents, plasticising ingredients, emulsifiers, flavourings and mixtures or two or more thereof.

## Patentansprüche

1. Kakaozusammensetzung, **dadurch gekennzeichnet, dass** sie Sonnenblumenkernpulver in einer Menge von zu 5 bis 30 Gew.-%, basierend auf dem Gesamtgewicht der Kakaozusammensetzung umfasst, wobei die Kakaozusammensetzung eine Schokoladenzusammensetzung ist, umfassend zu mindestens 30 Gew.-% Saccharose, mindestens 30 Gew.-%Kakaofeststoffe und weniger als 5 Gew.-% Milchfeststoffe.

2. Kakaozusammensetzung nach Anspruch 1,
**dadurch gekennzeichnet, dass** sie zu 10 bis 20 Gew.-% ein Sonnenblumenkernpulver umfasst.

3. Kakaozusammensetzung nach einem der vorstehenden Ansprüche,
**dadurch gekennzeichnet, dass** das Sonnenblumenkernpulver ein entfettetes Sonnenblumenkernpulver ist, vorzugsweise mit einem Fettgehalt von weniger als 30 Gew.-%, bezogen auf das Gesamtgewicht des Sonnenblumenkernpulvers.

4. Kakaozusammensetzung nach einem der vorstehenden Ansprüche,
**dadurch gekennzeichnet, dass** das Sonnenblumenkernpulver ein proteinreiches Sonnenblumenkernpulver ist, vorzugsweise mit einem Proteingehalt von mindestens 20 Gew.-%, bezogen auf das Gesamtgewicht des Sonnenblumenkernpulvers.

5. Die Kakaozusammensetzung nach einem der vorstehenden Ansprüche,
**dadurch gekennzeichnet, dass** das Sonnenblumenkernpulver ein Sonnenblumensamenkernpulver, vorzugsweise ein entfettetes Sonnenblumensamenkernpulver ist.

6. Kakaozusammensetzung nach einem der vorstehenden Ansprüche,
**dadurch gekennzeichnet, dass** sie Kakaobutter oder einen Kakaobutterersatz in einer Menge von mindestens 18 Gew.-%, bezogen auf das Gesamtgewicht der Kakaozusammensetzung umfasst.

7. Kakaozusammensetzung nach einem der vorstehenden Ansprüche,
**dadurch gekennzeichnet, dass** sie weniger als zu 2 Gew.-% Milchfeststoffe und mindestens zu 40 Gew.-% Saccharose umfasst.

8. Kakaozusammensetzung nach einem der vorstehenden Ansprüche,
**dadurch gekennzeichnet, dass** sie im Wesentlichen frei von Milchfeststoffen ist.

9. Kakaozusammensetzung nach einem der vorstehenden Ansprüche,
**dadurch gekennzeichnet, dass** sie zu 45 Gew.-% oder weniger, vorzugsweise zu 40 Gew.-% oder weniger, mehr bevorzugt zu 35 Gew.-% oder weniger Gesamtzucker umfasst.

10. Kakaozusammensetzung nach einem der vorstehenden Ansprüche,
**dadurch gekennzeichnet, dass** sie ferner einen oder mehrere Inhaltsstoffe, ausgewählt aus der Gruppe bestehend aus Füllstoffen, weichmachenden Inhaltsstoffen, Emulgatoren, Geschmacksstoffen und Mischungen oder zwei oder mehr davon, umfasst.

## Revendications

1. Composition de cacao, **caractérisée en ce qu'elle** comprend une poudre de graines de tournesol dans une quantité de 5 à 30 % en poids sur la base du poids total de la composition de cacao, dans laquelle la composition de cacao est une composition de chocolat comprenant au moins 30 % en poids de saccharose, au moins 30 % en poids de solides de cacao, et moins de 5 % en poids de solides de lait.

2. Composition de cacao selon la revendication 1, **caractérisée en ce qu'**elle comprend de 10 à 20 % en poids de poudre de graines de tournesol.

3. Composition de cacao selon l'une quelconque des revendications précédentes, **caractérisée en ce que** la poudre de graines de tournesol est une poudre de graines de tournesol dégraissée, de préférence avec une teneur en matières grasses inférieure à 30 % en poids par rapport au poids total de la poudre de graines de tournesol.

4. Composition de cacao selon l'une quelconque des revendications précédentes, **caractérisée en ce que** la poudre de graines de tournesol est une poudre de graines de tournesol à haute teneur en protéines, de préférence avec une teneur en protéines d'au moins 20 % en poids par rapport au poids total de la poudre de graines de tournesol.

5. Composition de cacao selon l'une quelconque des revendications précédentes, **caractérisée en ce que** la poudre de graines de tournesol est une poudre de noyaux de tournesol, de préférence une poudre de noyaux de tournesol dégraissée.

6. Composition de cacao selon l'une quelconque des revendications précédentes, **caractérisée en ce qu'**elle comprend du beurre de cacao ou un substitut du beurre de cacao dans une quantité d'au moins 18 % en poids sur la base du poids total de la composition de cacao.

7. Composition de cacao selon l'une quelconque des revendications précédentes, **caractérisée en ce qu'**elle comprend moins de 2 % en poids de solides de lait et au moins 40 % en poids de saccharose.

8. Composition de cacao selon l'une quelconque des revendications précédentes, **caractérisée en ce qu'**elle est sensiblement dépourvue de solides de lait.

9. Composition de cacao selon l'une quelconque des revendications précédentes, **caractérisée en ce qu'**elle comprend 45 % ou moins, de préférence 40 % ou moins, plus préférablement 35 % ou moins de sucres totaux en poids.

10. Composition de cacao selon l'une quelconque des revendications précédentes, **caractérisée en ce qu'**elle comprend en outre un ou plusieurs ingrédients choisis dans le groupe constitué d'agents gonflants, ingrédients plastifiants, émulsifiants, arômes et mélanges de deux ou plus de ceux-ci.
